# EUROPÄISCHE PATENTSCHRIFT

(11) **EP 3 123 906 B1**
(45) Veröffentlichungstag und Bekanntmachung des Hinweises auf die Patenterteilung: **02.09.2020**
(21) Anmeldenummer: 16172191.5
(22) Anmeldetag: 31.05.2016
(51) Int. Cl.: A47J 17/02

(54) **SPARSCHÄLER**
FRUIT OR VEGETABLE PEELER
EPLUCHEUR DE FRUITS OU DE LÉGUMES

(30) Priorität: 28.07.2015 CH 10952015
(43) Veröffentlichungstag der Anmeldung: 01.02.2017
(73) Patentinhaber: Schwarz Kitchen Selection SA, 1728 Rossens (CH)
(72) Erfinder: Greiner, Ulrich, 89231 Neu-Ulm (DE)
(74) Vertreter: Schneider Feldmann AG Patent- und Markenanwälte

(56) Entgegenhaltungen:
- EP-A1- 1 683 450
- WO-A1-2008/087462
- DE-U1-202004 012 171
- US-A1- 2007 227 013
- US-A1- 2014 150 675

## Beschreibung

### Technisches Gebiet

Die vorliegende Erfindung beschreibt einen Sparschäler mit einem Handgriff und einer an einem Griffkopf des Handgriffes angeordneten Klingenhalterung mit einer verstellbaren Pendelklinge, wobei die Pendelklinge um einen Winkel zwischen einer Klingenpendelachsen-Richtung und einer Grifflängsachsen-Richtung des Handgriffs verstellbar angeordnet ist, wobei die Klingenhalterung im wesentlichen halbkreisförmig ausgebildet ist und mit einer am Aussenumfang der Klingenhalterung angeordneten Klingenhalterungs-Profilausformung versehen ist, und dass weiterhin am Griffkopf eine zur Klingenhalterungs-Profilausformung komplementäre Griffkopf-Profilausformung vorhanden ist, derart, dass die Klingenhalterungs-Profilausformung und die Griffkopf-Profilausformung verschieblich und positionierbar ineinandergreifen um eine stufenlose Verstellbarkeit der Klingenhalterung am Handgriff zur Einstellung des Winkels zu erreichen.

### Stand der Technik

Aus dem Stand der Technik sind vielgestaltige Sparschäler zum manuellen Schälen und Portionieren von Lebensmitteln wie Obst und Gemüse bekannt, wobei jeweils nur die äusserste Schale in einer möglichst dünnen Schicht entfernt werden soll. Es soll ein möglichst sparsames Schälen unter möglichst geringer Abfallproduktion erreicht werden. Die heutigen Sparschäler weisen in der Regel eine Pendelklinge auf, deren Verlaufsrichtung unterschiedlich relativ zu einer Grifflängsachse angeordnet ist, wodurch die Schale von Obst und Früchten verschiedener Arten, beispielsweise von Kartoffeln, Gurken, Tomaten, Paprika, Spargel, Karotten oder Äpfeln, Birnen und Kiwis in dünnen Streifen entfernbar ist.

Je nach zu schneidendem bzw. zu schälenden Produkt kann die Ausrichtung der Verlaufsrichtung der Pendelklinge relativ zur Grifflängsachse eine Rolle spielen und ein besseres Schälergebnis oder eine verbesserte Handhabung kann erreicht werden. Die Pendelklinge muss möglichst einfach der äusseren Form des zu schälenden Produktes nachführbar sein, was durch unterschiedliche Mittel erreicht werden kann. Je nach Vorliebe des Benutzers können unterschiedliche Orientierungen der Verlaufsrichtung der Pendelklinge favorisiert werden.

In der DE202004012171 U1 ist ein Sparschäler mit einer Klingenhalterung mit einhängbarer Pendelklinge bekannt, wobei eine Klingenverlaufsrichtung relativ zu einer Grifflängsachse eines Handgriffes in zwei unterschiedlichen Winkeln einstellbar ist. Dabei kann die Pendelklinge in einem festen Winkel von 0° und einem festen Winkel von 90° relativ zur Grifflängsachse ausgerichtet werden.

Die unterschiedlichen Ausrichtungen der Klingenverlaufsrichtung zur Grifflängsachse sind je nach Anwendung und Vorliebe des Anwenders einstellbar. Während bei einem Winkel von 0° gerundete Gemüse und Obst vorteilhaft geschält werden können, ist üblicherweise die Schale von länglichen Lebensmitteln bei einem Winkel von 90° der Klingenverlaufsrichtung zur Grifflängsachse einfach entfernbar. Durch die DE202004012171 U1 wird ein Sparschäler bereitgestellt, der zwei bisher bekannte Sparschäler in einem vereint. Anwender wünschen sich aber mehr als zwei unterschiedliche Einstellmöglichkeiten des Winkels zwischen Klingenverlaufsrichtung der Pendelklinge und der Grifflängsachse des Handgriffes, was mit der DE202004012171 U1 nicht gelöst werden kann. Die Justage der Klingenverlaufsrichtung wird durch eine Schwenkbewegung der Klingenhalterung um eine Drehachse erreicht, die nur zwei Zustände zulässt in denen die Klingenverlaufsrichtung in der Ebene der Grifflängsachse zu liegen kommt.

Aus der US2005/0217122 ist ein Sparschäler bekannt, welcher eine variable Rotation einer Klingenhalterung samt verschwenkbarer Pendelklinge relativ zu einer Grifflängsachse erlaubt. Der Aufbau ähnelt einem Nassrasierer, wobei die Klingenhalterung y- oder gabelförmig ausgebildet ist und einen Drehdorn aufweist. Dieser Drehdorn ist durch eine Öse am Griff geführt und wird dort mit einem Drehknopf, welcher Aufspreizmittel umfasst, verdrehbar am Kopfbereich des Griffes gehalten. Die Pendelklinge samt Klingenhalterung kann in einer Achse die in einem festen Winkel relativ zur Grifflängsachse liegt, in verschiedenen Positionen arretiert werden.

Dieser Aufbau ist technisch recht aufwändig bzw. umständlich gestaltet, wobei die Klingenhalterung, der Drehknopf und die Grifföse voneinander vollständig trennbar sind. Entsprechend könnte der Drehknopf im Betrieb verloren gehen. Obwohl die Klingenhalterung unterschiedliche Stellungen zulässt, ist die Einstellbarkeit noch nicht wunschgemäss erreichbar. Um eine Rotierbarkeit der Pendelklinge zu erreichen, muss der Kopfbereich des Griffes von der Grifflängsachse wegweisend ausgerichtet sein, woraus die klobige und unhandliche Erscheinung resultiert. Die Klingenhalterung der US2005/0217122 kann zwar in diversen Stellungen arretiert, aber beispielsweise nicht derart relativ zum Grifflängsachse ausgerichtet werden, dass die Klingenverlaufsrichtung genau in der geraden Verlängerung der Grifflängsachse liegt.

### Darstellung der Erfindung

Die vorliegende Erfindung hat sich zur Aufgabe gestellt einen flexibel einsetzbaren und vielseitig verwandelbaren Sparschäler zu schaffen, sodass mit einem Sparschäler diverse Gemüse- und Obstarten entsprechend der Vorlieben des Benutzers optimal geschält werden können.

Diese Aufgabe erfüllt eine Vorrichtung mit den Merkmalen des Patentanspruches 1. Weitere vorteilhafte Ausgestaltungsformen sind im abhängigen Patentanspruch 2 offenbart.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: a) zeigt eine schematische Ansicht eines Sparschälers mit einer Klingenhalterung, wobei der eingestellte Winkel α zwischen der Klingenpendelachse und Grifflängsachse 90° beträgt,
b) zeigt eine Ansicht des Sparschälers gemäss Fig. 1a), wobei der eingestellte Winkel α 45° beträgt, und
c) zeigt eine Ansicht des Sparschälers gemäss Fig. 1a), wobei der eingestellte Winkel α 0° beträgt
- Figur 2: a) und b) zeigen einen Teilschnitt durch einen Sparschäler gemäss der Figur 1 mit einer Detailansicht der Befestigung der Klingenhalterung am Griffkopf des Haltegriffes.

### Beschreibung

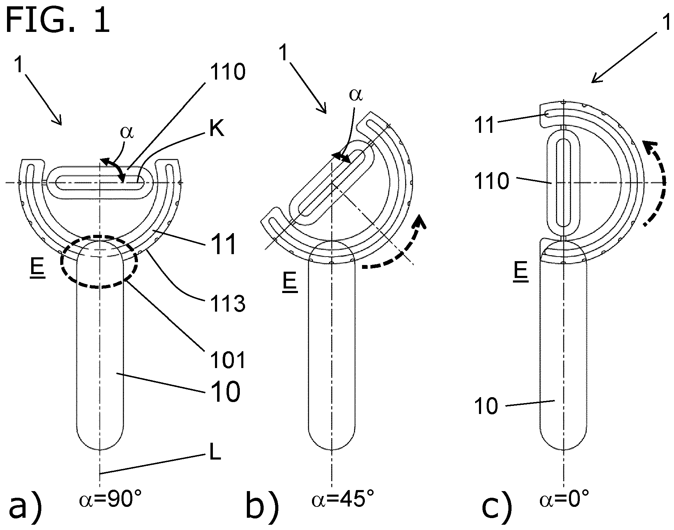

Die Fig. 1 zeigt drei verschiedene schematische Ansichten a), b) und c) eines Sparschälers 1 mit einem Handgriff 10 und einer an einem Griffkopf 101 des Handgriffes 10 angeordneten Klingenhalterung 11. Der Handgriff 10 hat eine Grifflängsachse L und die Klingenhalterung 11 hat eine Klingenpendelachse K, in der eine Pendelklinge 110 drehbar bzw. pendelnd gelagert ist. Ein Winkel α zwischen der Klingenpendelachse K und Grifflängsachse ist stufenlos einstellbar.
- Bei der Fig. 1a) beträgt der eingestellte Winkel α zwischen der Klingenpendelachse K und Grifflängsachse L 90°,
- Bei der Fig. 1b) beträgt der eingestellte Winkel α zwischen der Klingenpendelachse K und Grifflängsachse L 45°, und
- Bei der Fig. 1c) beträgt der eingestellte Winkel α zwischen der Klingenpendelachse K und Grifflängsachse L 0°.

Die Klingenpendelachse K und die Grifflängsachse L liegen hier in einer Ebene E bzw. spannen die Ebene E auf, die der Papierebene entspricht, wobei die Klingenhalterung 11 in dieser Ebene E, um einen Drehpunkt in dieser Ebene E rotierbar am Handgriff 10 gelagert ist. Entsprechend ist eine relative Auslenkung der Klingenhalterung 11 zur Grifflängsachse L und damit zum Handgriff 10 erreichbar. Vorzugsweise verläuft die Drehachse durch die Ebene E bzw. die Drehachse steht senkrecht auf der Ebene E.

Die Klingenhalterung 11 ist im Wesentlichen halbkreisförmig ausgebildet und hat eine am Aussenumfang 113 der Klingenhalterung 11 angeordnete Klingenhalterungs-Profilausformung. Weiterhin ist am Griffkopf 101 des Handgriffs 10 eine zur Klingenhalterungs-Profilausformung komplementäre Griffkopf-Profilausformung vorhanden. Beide sind von gebogener, schienenartiger Gestalt. Die Klingenhalterungs-Profilausformung und die Griffkopf-Profilausformung sind dabei in einer Weise komplementär, dass entweder die Klingenhalterungs-Profilausformung in der Griffkopf-Profilausformung oder aber die Griffkopf-Profilausformung in der Klingenhalterungs-Profilausformung unverlierbar gehalten ist. Es ist so, dass die Klingenhalterungs-Profilausformung und die Griffkopf-Profilausformung gegenseitig verschieblich und positionierbar ineinandergreifen um eine vielstufige bzw. stufenlose Verstellbarkeit der Klingenhalterung 11 am Handgriff 10 zur Einstellung des Winkels α zu erreichen.

Es versteht sich von selbst, dass die Griffkopf-Profilausformung eine der Klingenhalterungs-Profilausformung entsprechende Krümmung aufweisen muss.

Durch geeignete Wahl der Fertigungstoleranzen kann erreicht werden, dass zwischen Griffkopf-Profilausformung und der Klingenhalterungs-Profilausformung eine Spielpassung von der Art entsteht, dass die Teile kaum Spiel haben und mit Handkraft noch verschoben werden können.

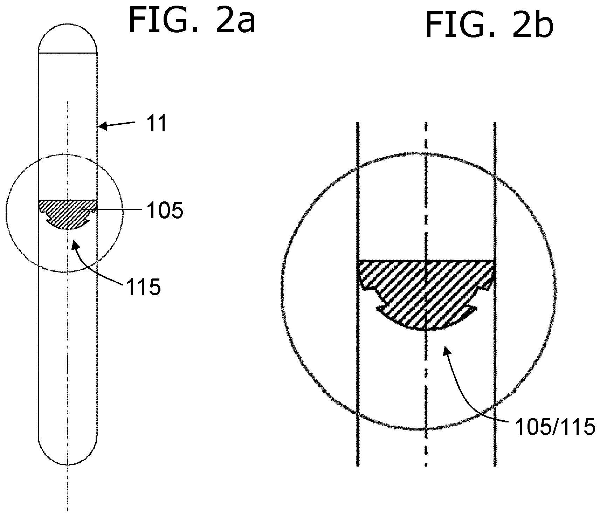

Die Figuren 2 a) und 2 b) zeigen einen Teilschnitt durch einen Sparschäler gemäss der Figur 1 mit einer Detailansicht der Befestigung der Klingenhalterung 11 am Griffkopf 101 des Haltegriffes 10.

Bei dieser erfindungsgemässen Ausführungsform besteht die Klingenhalterungs-Profilausformung aus einem schwalbenschwanzartigen Profilteil 115 an der Klingenhalterung 11 und die Griffkopf-Profilausformung aus einem schwalbenschwanzartigen Profilteil 105 am Griffkopf (schraffierter Bereich). Man kann hier von zwei schräggestellten Nuten am schwalbenschwanzartigen Profilteil 105 sprechen. Mit einer solchen Form lässt sich die Unverlierbarkeit gewährleisten.

Es können zusätzliche Feststellmittel vorhanden sein die zur einrastenden oder klemmenden Arretierbarkeit der Klingenhalterung 11 am Griffkopf 101 dienen. Im Ersteren Fall können dies beispielsweise Einrastnocken und Einrastvertiefungen sein, welche in den Figuren 1a bis 1c als Halbkreise am Umfang der Klingenhalterung 11 angedeutet sind. Im Letzteren Fall können die Feststellmittel beispielsweise auch Feststellschrauben oder andere auf die Spielpassung einwirkende Klemmmittel sein. Mit derartigen Mitteln kann verhindert werden, dass sich die Einstellung des Winkels α infolge des Spiels verändert.

### Bezugszeichenliste

1 Sparschäler
10 Handgriff
   101 Griffkopf
   105 schwalbenschwanzartiges Profilteil am Griffkopf
   L Grifflängsachse(bzw.-Richtung)
11 Klingenhalterung
   110 Pendelklinge
   113 Aussenumfang (der Klingenhalterung)
   115 schwalbenschwanzartiges Profilteil an der Klingenhalterung
   K Klingenpendelachse(bzw.-Richtung)
α Winkel (zwischen K und L)
E Ebene

## Patentansprüche

1. Sparschäler (1) mit einem Handgriff (10) und einer an einem Griffkopf (101) des Handgriffes (10) angeordneten Klingenhalterung (11) mit einer verstellbaren Pendelklinge (110), wobei die Pendelklinge (110) um einen Winkel (α) zwischen einer Klingenpendelachsen-Richtung (K) und einer Grifflängsachsen-Richtung (L) des Handgriffs (10) verstellbar angeordnet ist,
wobei die Klingenhalterung (11) im wesentlichen halbkreisförmig ausgebildet ist und mit einer am Aussenumfang (113) der Klingenhalterung (11) angeordneten Klingenhalterungs-Profilausformung versehen ist, und wobei weiterhin am Griffkopf (101) eine zur Klingenhalterungs-Profilausformung komplementäre Griffkopf-Profilausformung vorhanden ist, derart, dass die Klingenhalterungs-Profilausformung und die Griffkopf-Profilausformung verschieblich und positionierbar ineinandergreifen um eine stufenlose Verstellbarkeit der Klingenhalterung (11) am Handgriff (10) zur Einstellung des Winkels (α) zu erreichen, **dadurch gekennzeichnet, dass** die Klingenhalterungs-Profilausformung aus einem schwalbenschwanzartigen Profilteil (115) an der Klingenhalterung (11) und die Griffkopf-Profilausformung aus einem schwalbenschwanzartigen Profilteil (105) am Griffkopf (101) besteht, mit zwei schräggestellten Nuten am schwalbenschwanzartigen Profilteil (105).

2. Sparschäler (1) nach Patentanspruch 1, **dadurch gekennzeichnet, dass** zusätzliche Feststellmittel an der Klingenhalterung (11) und dem Griffkopf (101) angeordnet sind, welche auf die Spielpassung zwischen der Griffkopf-Profilausformung und der Klingenhalteurngs-Profilausformung einwirken.

## Claims

1. A low-waste peeler (1) with a handle (10) and a blade holder (11) that is arranged on a grip head (101) of the handle (10) and has an adjustable pendulum blade (110), wherein the pendulum blade (110) is arranged so as to be adjustable between a blade pendulum axis direction (K) and a longitudinal grip axis direction (L) of the handle (10) by an angle (α), wherein the blade holder (11) is essentially realized semicircular and provided with a blade holder profile moulding that is arranged on the outer circumference (113) of the blade holder (11), and wherein a grip head profile moulding, which is realized complementary to the blade holder profile moulding, furthermore is provided on the grip head (101) in such a way that the blade holder profile moulding and the grip head profile moulding engage into one another in a displaceable and positionable manner in order to achieve a continuously variable adjustability of the blade holder (11) on the handle (10) for adjusting the angle (α), **characterized in that** the blade holder profile moulding consists of a dovetail-like profile part (115) on the blade holder (11) and the grip head profile moulding consists of a dovetail-like profile part (105) on the grip head (101) with two slanted grooves on the dovetail-like profile part (105).

2. The low-waste peeler (1) according to claim 1, **characterized in that** additional fixing means are arranged on the blade holder (11) and the grip head (101) and act upon the clearance fit between the grip head profile moulding and the blade holder profile moulding.

## Revendications

1. Éplucheur économe (1), pourvu d'un manche (10) et d'un support de lame (11) placé sur une tête de manche (101) du manche (10), doté d'une lame pendulaire (110) réglable, la lame pendulaire (110) étant placée en étant réglable autour d'un angle (α) entre une direction d'axe pendulaire de lame (K) et une direction d'axe longitudinal de manche (L) du manche (10), le support de lame (11) étant conçu sensiblement en forme de demi-cercle et étant muni d'une empreinte profilée de support de lame placée sur la périphérie extérieure (113) du support de lame (11) et par ailleurs sur la tête de manche (101) étant présente une empreinte profilée de tête de manche complémentaire à l'empreinte profilée de support de lame, de telle sorte que l'empreinte profilée de support de lame et l'empreinte profilée de tête de manche s'engagent l'une dans l'autre de manière déplaçable et positionnable pour obtenir une possibilité de réglage continue du support de lame (11) sur le manche (10), pour régler l'angle (α), **caractérisé en ce que** l'empreinte profilée de support de lame est constituée d'une partie profilée (115) en tête d'aronde sur le support de lame (11) et l'empreinte profilée de tête de manche est constituée d'une partie profilée (105) en tête d'aronde sur la tête de manche (101), avec deux rainures obliques sur la partie profilée (105) en tête d'aronde.

2. Éplucheur économe (1) selon la revendication 1, **caractérisé en ce que** des moyens d'immobilisation additionnels sont placés sur le support de lame (11) et sur la tête de manche (101), lesquels agissent sur l'ajustement avec jeu entre l'empreinte profilée de tête de manche et l'empreinte profilée de support de lame.
